# EUROPÄISCHE PATENTSCHRIFT

(11) **EP 0 903 552 B1**
(45) Veröffentlichungstag und Bekanntmachung des Hinweises auf die Patenterteilung: **21.01.2004**
(21) Anmeldenummer: 98107936.1
(22) Anmeldetag: 30.04.1998
(51) Int. Cl.: F27D 5/00, F27D 3/00, F27D 3/12

(54) **Brennhilfsmittel für Dachziegel**
Kiln furniture for roofing tiles
Accessoire d'enfournement pour tuiles de toiture

(30) Priorität: 30.04.1997 DE 19718253; 30.04.1997 DE 19718252
(43) Veröffentlichungstag der Anmeldung: 24.03.1999
(73) Patentinhaber: Keller H.C.W. GmbH, 49479 Ibbenbüren-Laggenbeck (DE)
(72) Erfinder: DERHAKE, Thomas, Prof. Dr.-Ing., D-49479 Ibbenbüren (DE)
(74) Vertreter: Busse & Busse Patentanwälte

(56) Entgegenhaltungen:
- EP-A- 0 786 636
- DE-A- 3 340 282
- DE-A- 3 425 625
- DE-A- 4 337 189
- DE-C- 3 244 183
- DE-U- 29 518 345

## Beschreibung

Die Erfindung bezieht sich auf ein Brennhilfsmittel zum Brennen von Dachziegeln in einlagiger Anordnung.

Um Qualitätserzeugnisse zu erzielen, bedarf es insbesondere beim Brennen von Falzziegeln, die aufgrund ihrer querschnittsmäßigen Verformungen in bzw. auf unterschiedlichen Ebenen abgestützt werden sollten / müssen, Formlingsträger mit die Formlingsrückseite formgerecht unterstützender Stützfläche - was durch sogen. H-Kassetten gewährleistet ist. In der Praxis werden bisher einzelne H-Kassetten, welche jeweils nur einen Dachziegelformling aufnehmen, verwendet. Dabei ergibt sich eine umständliche und zeitraubende Handhabung. Außerdem ist eine solche Anlage mit H-Kassetten platzraubend, kostspielig und letztlich kaum wirtschaftlich.

Der Erfindung liegt die Aufgabe zugrunde, ein verbessertes Brennhilsmittel zum einlagigen Brennen von Dachziegeln zu schaffen, welches eine formgerechte Formlingsunterstützung wie bei H-Kassetten-Anlagen ermöglicht, jedoch die Nachteile von H-Kassetten vermeidet.

Erfindungsgemäß wird dies durch ein Brennhilfsmittel gemäß Patentanspruch 1 gelöst. Vorteilhafte Weiterbildungen ergeben sich aus den Unteransprüchen.

Mit dem erfindungsgemäßen Brennhilfsmittel können auf einfachere und wirtschaftlichere Weise als bei bekannten Anlagen mit H-Kassetten für das Dachziegel-Brennen nun verzugsarme, d.h. weitgehendst verzugsfreie, Dachziegel erstellt werden. Von besonderem Vorteil ist, daß eine Vielzahl von Dachziegel-Formlingen reihenweise auf einem Brenngestell angeordnet wird, wodurch sich die Brennhilfsmittel-Masse erheblich reduziert. Aufgrund der geringen aufzuheizenden Masse ergibt sich eine erhebliche Energieeinsparung beim Dachziegel-Brand. Da jedes Brenngestell eine große Breite - bis zu etwa 3,5 m bei derzeit handelsüblichen Profilen oder Rohren aus SiSiC - hat, kann es beim Einsatz in einem Tunnelofen die gesamte Wagenbreite oder (bei besonders breitem Ofenformat) die halbe Wagenbreite einnehmen und trotzdem sind nur zwei längsverlaufende Stützstreifen auf der Wagen-Oberseite erforderlich, was eine besonders einfache und hochwirksame Wagenisolation ermöglicht. Vorteilhaft ist auch, daß beim erfindungsgemäßen Brenngestell-Konzept nur das Traggestell (Seitenteile/Ständer plus Querverbinder) aus teurem Material, insbesondere Nichtoxidkermik (z.B. SiC oder SiSiC), und die Formlingsträger, welche die Funktion des H-Stegs einer H-Kassette übernehmen, aus preiswerterem Material, insbesondere Silikatkeramik (z.B. Cordierit, Mullit od. dgl.), hergestellt sein können - hierdurch wird eine Senkung von Investitionskosten erzielt.

Ausführungsbeispiele der Erfindung sind auf den Zeichnungen schematisch dargestellt und werden im folgenden näher erläutert. Es zeigen:
Figur 1a - 1c jeweils eine Seitenansicht eines Tunnelofenwagen-Zuges mit erfindungsgemäßer Technik der Brennhilfsmittel-Handhabung zwecks Be- und Entladung (wobei die verschiedenen Verfahrensschritte dargestellt sind),
Figur 2 eine Frontalansicht eines erfindungsgemäßen Brenngestells, welches auf einem Ofenwagen abgestellt ist, wobei der besseren Übersicht wegen lediglich ein Formlingsträger einer Formlingsträgerreihe beladen ist,
Figur 3 eine Draufsicht auf Figur 2,
Figur 4 eine Stirnansicht entsprechend Ansicht "A" in Figur 2,
Figur 5 einen Schnitt entsprechend der Schnittlinie "B-B" in Figur 2,
Figur 6 einen Schnitt durch eine gegenüber Figur 5 abgeänderte Ausführungsform der Formlingsträger-Anordnung im Traggestell eines Brenngestelles,
Figur 7 einen Schnitt durch eine weitere Ausführungsform eines erfindungsgemäßen Brenngestells.

Die Erfindung betrifft bei einer Anlage zum Brennen von Dachziegel-Formlingen 1 den Bereich "Brennhilfsmittel". Die Brennhilfsmittel werden als Brenngestell 3 bezeichnet. Jedes Brenngestell 3 setzt sich aus einem Traggestell 4 sowie einer Anzahl von Formlingsträgern 5 zusammen.

Die Traggestelle 4 erstrecken sich mit Ihrer Längenausdehnung quer zur Transportrichtung T der Tunnelofenwagen 2. Sie nehmen bei schmalen Tunnelöfen die gesamte Wagenbreite und bei breiten Tunnelöfen etwa die halbe Wagenbreite ein. Das sogenannte Traggestell 4 eines jeden Brenngestells 3 besitzt als Ständer ausgebildete Seitenteile 4a, welche von Querstangen 4b durchfaßt werden, auf denen die einzelnen Formlingsträger 5 angeordnet sind.

Jedes Brenngestell 3 ist derart ausgeführt, daß sich die darauf angeordneten Dachziegel-Formlinge 1 während des Brennens in einem aus der Vertikalen geneigten Winkel (von etwa 50 - 85 ° zwischen der Horizontalen und der Formlingsrückseite) abstützen. Jedes Traggestell 4 ist dabei derart gestaltet, daß es ohne Arretierungsmittel zur lagesicheren Anordnung aufstellbar ist. Auf dem Brenngestell 3 ist gemäß zeichnerischer Darstellung eine Formlingsquerreihe angeordnet - es können jedoch auch zwei Formlingsreihen vorgesehen sein.

Die Formlingsträger 5 sind derart ausgeführt, daß sich eine formgerechte Rückseiten-Abstützung für die Dachziegel-Formlinge (insbesondere Falzziegel-Formlinge) ergibt. Die vorteilhafte Formlingsabstützung ist u.a. jeweils durch eine Stützleiste 5a gewährleistet. Um eine gute Heißluftversorgung für den zu brennenden Dachziegel-Formling 1 zu erzielen, sind entsprechende Durchbrüche 5b vorhanden.

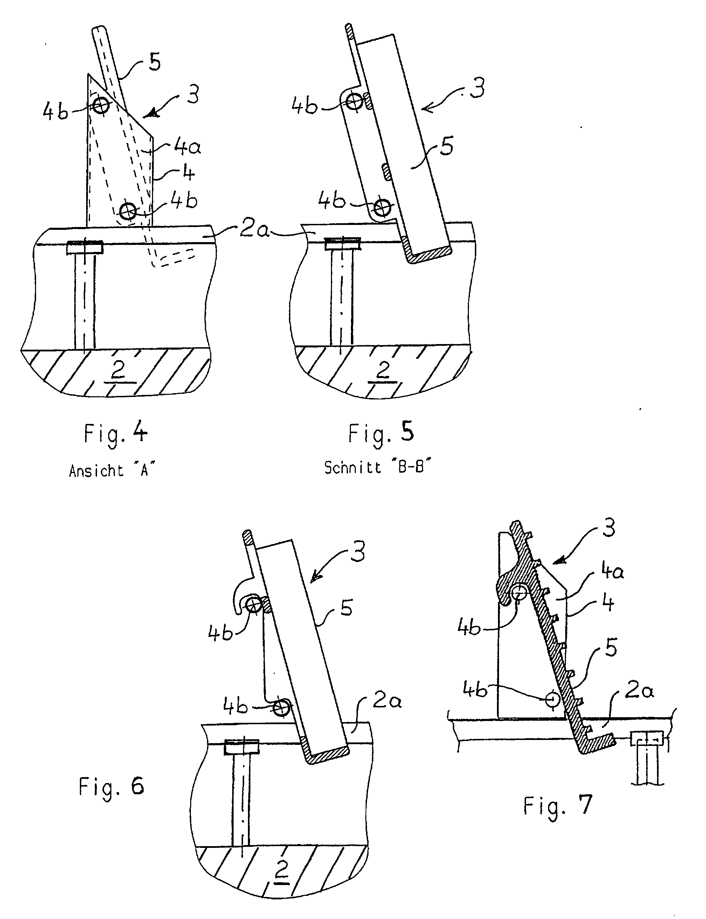

Die einzelnen Formlingsträger 5 können auf den Querstangen 4b in einer Steckverbindung (vgl. Figur 5) oder in einer Einhänge-Anordnung (vgl. Figur 6) angeordnet sein. Die dargestellten Ausführungsformen zeigen lediglich das Grundprinzip und lassen vielerlei Gestaltungsmöglichkeiten zu.

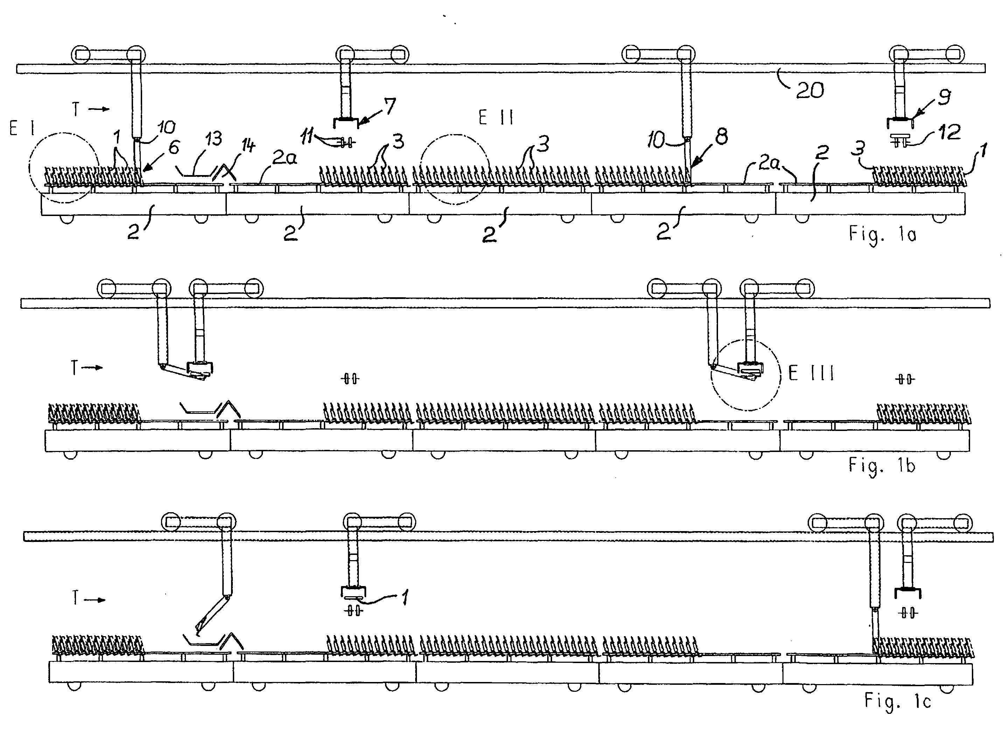

Bei der Ausführungsform gemäß Figur 5 ist ein leichtes Brenngestell-Verschwenken zwecks automatischer Brennhilfsmittel-Reinigung (vgl. Figur 1c) möglich, ohne daß dazu eine zusätzliche Sicherungsmaßnahme (Herabfallsicherung) erforderlich ist. Die Ausführung gemäß Figur 6 hat den Vorteil, daß bei einer eventuellen Formlingsträger-Beschädigung ein solcher Formlingsträger 5 leicht austauschbar ist.

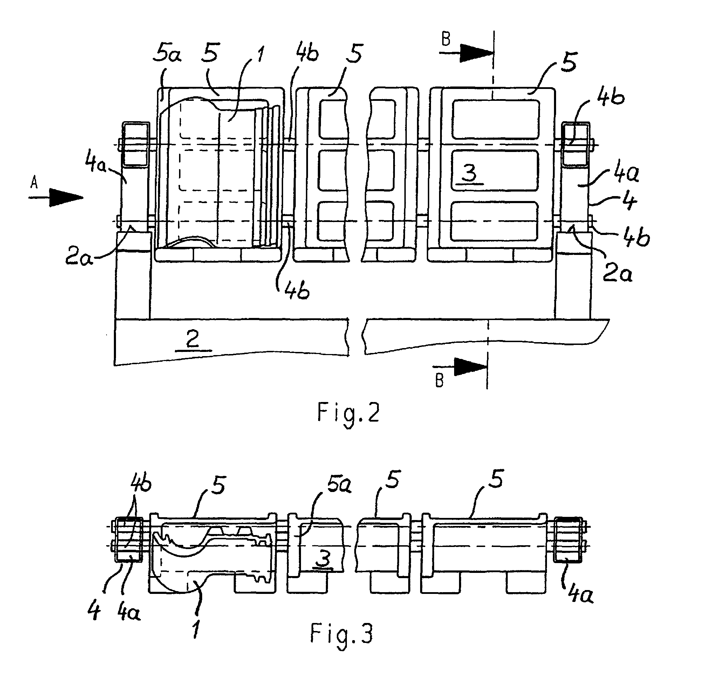

Wie aus Figur 2 und 3 zu ersehen ist, stehen die Querstangen 4b über die äußere Seitenfläche eines jeden Seitenteiles/Ständers 4a über. Die Stirnenden der Querstangen 4b stellen dabei die Greifflächen für das Brenngestell-Greifen dar.

In bevorzugter Weise sind die Traggestell-Seitenteile 4a sowie Traggestell-Querstangen 4b rohrförmig ausgebildet. Der Werkstoff ist hoch hitzebeständig und besteht vorzugsweise aus SiSiC - wogegen die feuerfesten Formlingsträger 5 vorzugsweise aus preiswerterem Keramikwerkstoff (z.B. Cordierit oder dgl.) bestehen.

Jeder Tunnelofenwagen 2 benötigt lediglich für das Brenngestell-Aufstellen stabile Stützflächen 2a, insbesondere Längsschienen, und kann im übrigen Bereich weniger belastbar und dafür entsprechend stark wärmeisolierend ausgebildet sein.

Der Bewegungsablauf der einzelnen Phasen des Be- und Entladens ist den Figuren 1a - 1c zu entnehmen, so daß sich eine ausführliche Beschreibung erübrigt. Es wird lediglich darauf hingewiesen, daß Pos. 6 an 7 und Pos. 8 an 9 übergibt. Die Förderer 11 und 12 verlaufen vorzugsweise horizontal - wie aus der Zeichnung (vgl. Fig. 1a - 1c) zu ersehen.

Bei der bevorzugten und dargestellten Ausführungsform erstreckt sich das erfindungsgemäße Verfahren über insgesamt 5 Tunnelofenwagen 2:
a) Dachziegel-Entladewagen
b) Brennhilfsmittel-Aufnahmewagen (für sogenannte Leerkassetten)
c) Brennhilfsmittel-Zwischenspeicherungswagen (auf welchen auch verzichtet werden kann)
d) Brennhilfsmittel-Abnahmewagen
e) Formlings-Beladewagen.

Die einzelnen Tunnelofenwagen 2 werden taktweise bewegt, wobei der sogenannte Wagenschub genauso groß wie die Ofenwagen-Länge ist. Das sogenannte "Feintakten" zum Beladen und Entladen der einzelnen Brenngestelle (Brennhilfsmittel) 3 erfolgt mittels der einzelnen, parallel zum Wagengleis (nicht dargestellt) Hin- und herfahrbaren Greifeinrichtungen, die als Ganzes jeweils mit 6, 7, 8 und 9 beziffert sind. Die Greifeinrichtungen 6 und 8 erfassen jeweils ein Brenngestell 3 an dessen Stirnenden und die Greifeinrichtungen 7 und 9 sind für das Dachziegel-Entladen bzw. für das Formlings-Beladen vorgesehen.

Die Greifeinrichtung 6 (für mit gebrannten Dachziegeln 2 beladene Brenngestelle 3 sowie zum Absetzen von geleerten Brenngestellen, sogenannten Leerkassetten) sowie die Greifeinrichtung 8 (für unbeladene/leere Brenngestelle 3) sind mit einem verfahrbaren, einknickbaren Grundgestell (dessen Schwenkachse mit 10 beziffert ist) versehen, wogegen die Dachziegel-Greifeinrichtung 7 (für den Entladevorgang) und die Formlings-Greifeinrichtung 9 (für den Beladevorgang) mit einem verfahrbaren Hubwerk ausgestattet sind. Die Kranschienen für die Verfahrbarkeit der Greifeinrichtungen 6 - 9 sind mit 20 beziffert.

Die Dachziegel-Abförderung erfolgt mittels eines quer zur Tunnelofenwagen-Transportrichtung T verlaufenden Förderers 11. Die Zuförderung der zu brennenden Dachziegel-Formlinge 1 erfolgt mittels eines quer zur Ofenwagen-Transportrichtung T verlaufenden Förderers 12.

Wie aus der Zeichnung zu ersehen ist, besteht zwischen den zu entleerenden Brenngestellen 3 und den entleerten sowie in eine Warteposition gebrachten Brenngestellen 3 ein Leerraum von einer Wagenlänge - wobei sich dieser brenngestellfreie Raum in der aus Fig. 1a - 1c ersichtlichen "Grundstellung" vorzugsweise etwa hälftig auf zwei benachbarte Tunnelofenwagen 2 aufteilt. Innerhalb dieses brenngestellfreien Raumes ist in vorteilhafter Weise eine Ziegelbruch-Auffangeinrichtung 13, insbesondere ein sogenanntes Bruchband, angeordnet, auf welches eventuell vorhandene Bruchstücke, Abplatzungen und dgl. durch einfaches Verschwenken des unteren Bereichs der Tragkonstruktion der Greifeinrichtung 6 um ihre Schwenkachse 10 möglich ist (vgl. Figur 1c). Im selben brenngestellfreien Raum kann außerdem eine Tunnelofenwagen-Reinigungseinrichtung 14 angeordnet sein - dieselbe kann von einer Absaugeinrichtung gebildet sein oder eine solche (z.B. eine Saugleiste) aufweisen.

In bevorzugter Weise sind die Tunnelofenwagen 2 für Brenngut-Seitenbefeuerung konzipiert und dementsprechend sind die ein starres Widerlager bildenden und mit 2a bezifferten Längsschienen im Abstand zur Wagenplateau-Oberfläche angeordnet.

### Bezugszeichenliste

- 1: Dachziegel-Formling oder Dachziegel
- 2: Tunnelofenwagen
- 2a: stabile Stützflächen, insbesondere Längsschienen als Trag- und Abstellflächen für Brenngestelle 3
- 3: Brenngestelle
- 4: Traggestell (Bestandteil von 3)
- 4a: Seitenteile, insbesondere Ständer
- 4b: Querstangen
- 5: Formlingsträger (Bestandteil von 3)
- 5a: Stützleiste für Dachziegel-Falz oder gegenüber der Dachziegel-Hauptfläche
versetzte Kante
- 6: Greifeinrichtung für mit gebrannten Dachziegeln 2 beladene Brenngestelle 3
sowie zum Absetzen von geleerten Brenngestellen 3 (sogen. Leerkassetten)
- 7: Dachziegel-Greifeinrichtung (für den Entladevorgang)
- 8: Greifeinrichtung für unbeladene (leere) Brenngestelle 3
- 9: Formlings-Greifeinrichtung (für den Beladevorgang)
- 10: Schwenkachse (innerhalb von 6 - 8)
- 11: Förderer für die Abförderung gebrannter Dachziegel 1
- 12: Förderer für die Zufuhr von zu brennenden Dachziegel-Formlingen 1
- 13: Ziegelbruch-Auffangeinrichtung, insbes. sogen. Bruchband
- 14: Tunnelofenwagen-Reinigungseinrichtung
- 20: Kranschienen für 6 - 9
- T: Transportrichtung

## Patentansprüche

1. Heißluftdurchströmbares Brennhilfsmittel zum Brennen von Dachziegeln, insbesondere Falzziegeln, mit einer eine formgerechte Rückseiten-Abstützung der Dachziegel-Formlinge ermöglichenden Formlingsträger-Ausbildung,
**dadurch gekennzeichnet, daß**
a) dasselbe als ein Brenngestell (3) zur Aufnahme einer Vielzahl von Dachziegel-Formlingen (1) in horizontaler Reihe und aus der Vertikalen geneigter Schräglage ausgebildet ist,
b) es ein Traggestell (4) und eine Vielzahl von jewells nur einen Dachziegel-Formling (1) aufnehmenden Formlingsträgern (5) aufweist sowie
c) das Traggestell (4) selbststehend, d.h. arretiermittelfrei standsicher absetzbar, ausgeführt ist und zwischen zwei Seitenteilen (4a) mindestens zwei Querverbinder, insbesondere querverlaufende rohrförmige Querstangen (4b), aufweist, auf denen die einzelnen Formlingsträger (5) in Steck- und/oder Einhak-Verbindung angeordnet sind.

2. Dachziegel-Brenngestell nach Anspruch 1, **dadurch gekennzeichnet, daß** die Traggestell-Querstangen (4b) außenseitig über die zwei ständerbildenden Traggestell-Seitenteile (4a) hinausragen und ihre Stirnenden Greiflächen bilden.

3. Dachziegel-Brenngestell nach Anspruch 1, **dadurch gekennzeichnet, daß** das Traggestell (4) aus hitzebeständigem Rohr aus Nichtoxidkeramik, insbesondere auf der Basis von SiC, besteht.

4. Dachziegel-Brenngestell nach Anspruch 3, **dadurch gekennzeichnet, daß** das Traggestell (4) aus SiSiC hergestellt ist.

5. Dachziegel-Brenngestell nach Anspruch 1, **dadurch gekennzeichnet, daß** die Formlingsträger (5) in der Art eines H-Kassetten-Steges ausgebildet sind und aus einem Werkstoff auf Keramik-Basis, insbesondere Silikatkeramik, bestehen.

6. Dachziegel-Brenngestell nach Anspruch 1, **dadurch gekennzeichnet, daß** die Traggestell-Querstangen (4b) auf einer aus der Vertikalen geneigten Schrägen ausgeordnet sind.

7. Dachziegel-Brenngestell nach Anspruch 1, **dadurch gekennzeichnet, daß** die Formlingsträger (5) den aufgelegten Dachziegel-Formling in einer Schräglage abstützen, die zwischen der Dachziegel-Rückseite und der Horizontalen einen Winkel von etwa 50 - 80° einschließt.

8. Dachziegel-Brenngestell nach Anspruch 1, **dadurch gekennzeichnet, daß** das Traggestell (4) zwei Querverbinder (4b) aufweist, von denen der eine Bestandteil der Einhak-Verbindung der Formlingsträger (5) ist und der andere ein Widerlager für die Formlingsträger-Abstützung bildet.

9. Dachziegel-Brenngestell nach Anspruch 1, **dadurch gekennzeichnet, daß** das bodenseitige Querschnittende eines jeden Formlingsträgers (5) zumindest bereichsweise als ein das Herabrutschen eines Dachziegel-Formlings (1) verhinderndes Widerlager ausgebildet ist.

10. Dachziegel-Brenngestell nach einem der vorhergehenden Ansprüche, **dadurch gekennzeichnet, daß** es als Bestandteil eines Tunnelofenwagens (2) konzipiert ist.

11. Dachziegel-Brenngestell nach Anspruch 10, **dadurch gekennzeichnet, daß** es in Querreihen-Anordnung etwa die ganze Wagenbreite einnimmt.

12. Dachziegel-Brenngestell nach Anspruch 10, **dadurch gekennzeichnet, daß** es in Querreihen-Anordnung annähernd die halbe Wagenbreite einnimmt.

## Claims

1. Burning device through which hot air can be passed, for burning roof tiles, particularly gutter tiles, designed in the form of a briquette support to provide a back support for the roof tile briquettes adapted to their shape, **characterised in that**
a) the same is designed as a burning frame (3) for receiving a large number of roof tile briquettes (1) in a horizontal row and in an oblique position inclined relative to the vertical:
b) it exhibits a supporting frame (4) and a large number of briquette supports (5) receiving only one roof tile briquette (1), and
c) the supporting frame (4) has a free-standing construction, i.e. it can be stably deposited and is free from locking mechanisms, and exhibits between two lateral sections (4a) at least two cross connectors, in particular tubular cross bars (4b) running in a transverse direction, on which are arranged the individual briquette supports (5) in the form of a plug-in and/or hook-in connection.

2. Tile burning frame according to claim 1, **characterised in that** the supporting frame cross bars (4b) project on the outside from the two lateral sections (4a) of the supporting frames forming stands, and **in that** their front ends form gripping faces.

3. Tile burning frame according to claim 1, **characterised in that** the supporting frame (4) consists of heat resistant pipe of non-oxide ceramic, particularly SiC-based.

4. Tile burning frame according to claim 3, **characterised in that** the supporting frame (4) is manufactured from SiSiC

5. Tile burning frame according to claim 1, **characterised in that** the briquette supports (5) are designed in the manner of an H-panel ridge, and consist of a ceramic-based material, particularly silicate ceramic.

6. Tile burning frame according to claim 1, **characterised in that** the supporting frame cross bars (4b) are arranged on a slope inclined from the vertical.

7. Tile burning frame according to claim 1, **characterised in that** the briquette supports (5) support the tile briquette placed on them in an oblique position which forms an angle of approximately 50 - 80° between the back of the tile and the horizontal.

8. Tile burning frame according to claim 1, **characterised in that** the supporting frame (4) exhibits two cross connectors (4b), one of which forms part of the hook-in connection of the briquette supports (5) and the other forms an abutment for the briquette support.

9. Tile burning frame according to claim 1, **characterised in that** the cross-sectional end of each briquette support (5), on the bottom, is designed at least in certain areas as an abutment preventing a tile briquette (1) from sliding off

10. Tile burning frame according to one of the preceding claims, **characterised in that** it is designed as part of a tunnel furnace car (2).

11. Tile burning frame according to claim 10, **characterised in that** in the transverse row arrangement it occupies approximately the entire widtn of the car.

12. Tile burning frame according to claim 10, **characterised in that** in the transverse row arrangement it occupies almost half the car width

## Revendications

1. Accessoire de cuisson traversé par de l'air chaud, pour la cuisson de tuiles notamment de tuiles mécaniques, conçu comme support d'ébauche permettant un appui du côte arrière de forme appropriée pour l'ébauche de tuiles,
**caractérisé en ce que**
a) il est réalisé comme accessoire de cuisson (3) pour recevoir plusieurs ébauches de tuiles (1) en rangée horizontale et en position inclinée par rapport à la direction verticale ;
b) il comporte un bâti (4) et plusieurs supports d'ébauche (5) recevant chacun seulement une ébauche de tuile (1) ; et
c) le bâti (4) est autonome c'est-à-dire qu'il tient en place sans moyen de blocage et entre deux côtés (4a) il comporte au moins deux traverses en particulier des tiges transversales (4b), tubulaires, dirigées transversalement, recevant les différents supports d'ébauche (5) par une liaison par en fichage et/ou d'accrochage.

2. Accessoire de cuisson de tuiles selon la revendication 1,
**caractérisé en ce que**
les traverses (4b) dépassent du côté extérieur par rapport aux deux parois latérales (4a) du bâti constituant des appuis, et leurs extrémités constituent des surfaces de préhension.

3. Accessoire de cuisson de tuiles selon la revendication 1,
**caractérisé en ce que**
le bâti (4) est un tube réfractaire en céramique non oxydable notamment à base de SiC.

4. Accessoire de cuisson de tuiles selon la revendication 3,
**caractérisé en ce que**
le bâti (4) est en SiSiC.

5. Accessoire de cuisson de tuiles selon la revendication 1,
**caractérisé en ce que**
les supports d'ébauche (5) sont réalisés sous la forme d'une entretoise en caisson à structure en H en une matière à base de céramique notamment en céramique de silicate.

6. Accessoire de cuisson de tuiles selon la revendication 1,
**caractérisé en ce que**
les traverses (4b) sont prévues sur des rampes inclinées par rapport à la direction verticale.

7. Accessoire de cuisson de tuiles selon la revendication 1,
**caractérisé en ce que**
les supports d'ébauche (5) soutiennent les ébauches de tuiles en position inclinée, et cette position forme entre le côté arrière de la tuile et la direction horizontale un angle de l'ordre de 50 - 80°.

8. Accessoire de cuisson de tuiles selon la revendication 1,
**caractérisé en ce que**
le bâti (4) comporte deux traverses (4b) dont l'une fait partie de la liaison d'accrochage des supports d'ébauche (5) et l'autre est un appui pour le support d'ébauche.

9. Accessoire de cuisson de tuiles selon la revendication 1,
**caractérisé en ce que**
l'extrémité transversale du côté du fond de chaque support d'ébauche (5) est réalisée au moins par zones comme un appui évitant que l'ébauche de tuile (1) ne glisse.

10. Accessoire de cuisson de tuiles selon l'une des revendications précédentes,
**caractérisé en ce qu'**
il est conçu comme composant d'un chariot pour four à tunnel (2).

11. Accessoire de cuisson de tuiles selon la revendication 10,
**caractérisé en ce que**
sur une disposition en rangées transversales, il occupe sensiblement toute la largeur du chariot.

12. Accessoire de cuisson de tuiles selon la revendication 10,
**caractérisé en ce que**
sur une disposition en rangées transversales, il occupe sensiblement la moitié d'une largeur de chariot.
